Europäisches Patentamt

European Patent Office

Office européen des brevets

(11) Veröffentlichungsnummer : **0 152 739**
**B1**

# (12) EUROPÄISCHE PATENTSCHRIFT

(45) Veröffentlichungstag der Patentschrift :
11.11.87

(51) Int. Cl.⁴ : **H 02 J   3/42,** H 02 H   3/06

(21) Anmeldenummer : 85100110.7

(22) Anmeldetag : 07.01.85

(54) **Verfahren zur Ermittlung des Zeitpunktes der Wiedereinschaltung eines Leistungsschalters und Gerät zur Durchführung dieses Verfahrens.**

(30) Priorität : 14.02.84 CH 699/84

(43) Veröffentlichungstag der Anmeldung :
28.08.85 Patentblatt 85/35

(45) Bekanntmachung des Hinweises auf die Patenterteilung : 11.11.87 Patentblatt 87/46

(84) Benannte Vertragsstaaten :
CH DE FR IT LI SE

(56) Entgegenhaltungen :
DE-A- 2 502 377
US-A- 3 599 007
BROWN BOVERI REVIEW, Band 68, Nr. 2, Februar 1981, Seiten 79-86, Baden, CH; W. KOLBE u.a.: "New devices for autoreclosure and their applications"

(73) Patentinhaber : BBC Brown Boveri AG
CH-5401 Baden (CH)

(72) Erfinder : Blahous, Leopold, Dr. Dipl.-Ing.
Lindenhof 8
CH-5430 Wettingen (CH)

**0 152 739**

**Beschreibung**

Bei der Erfindung wird ausgegangen von einem Verfahren zur Ermittlung des Zeitpunktes der Wiedereinschaltung eines Leistungsschalters nach dem Oberbegriff des Anspruchs 1.

Mit diesem Oberbegriff nimmt die Erfindung Bezug auf einen Stand der Technik wie er in dem Aufsatz « Measures taken to reduce overvoltages when energizing no-load lines » von G. Köppl in Surges in High Voltage Networks ; edited by K. Ragaller, Plenum Press New York 1980 beschrieben ist.

In elektrischen Netzen mit Speisespannungen grösser oder gleich 362 kV wird die Isolation durch die Schaltspannungsbeanspruchung bestimmt. Ein sehr kritischer Fall sind die Einschaltüberspannungen während der Schnellwiedereinschaltung nach erfolgreich unterbrochenen einphasigen Erdkurzschlüssen auf einer Leitung. Bei dreiphasiger Unterbrechung eines solchen einphasigen Kurzschlusses, d. h. wenn alle 3 Pole des Leistungsschalters geöffnet sind, unterbrechen — bei beidseitiger Abschaltung — die letztlöschenden zwei Pole der gesunden Phasen eine leerlaufende Leitung. Für den Fall unkompensierter Leitungen mit kapazitiven Spannungswandlern wird eine nur sehr langsam sich ändernde Ladung auf der Leitung zurückgelassen. Um bei der Schnellwiedereinschaltung nicht bei Gegenpolarität von Speisespannung und Ladung zu schalten, werden nun bei dem bekannten Verfahren die Polaritäten der Speisespannung und der auf der abgeschalteten Leitung verbliebenen Ladung erfasst und bei Polaritätsgleichheit wiedereingeschaltet. In parallel kompensierten Leitungen bildet die vorgeladene Leitungskapazität mit den Induktivitäten kompensierender Drosseln einen Schwingkreis. Dies bewirkt, dass die Spannung auf der Leitungsseite mit einer durch den Kompensationsgrad bestimmten Eigenfrequenz, die niedriger als die Frequenz der Speisespannung ist, schwingt. Dadurch ist ein Einschalten bei Gegenpolarität von Speise- und Leitungsspannung möglich. Bei einem solchen Einschalten entstehen dann am offenen Leitungsende unzulässig hohe Schaltüberspannungen.

Es ist Aufgabe der Erfindung ein Verfahren der gattungsgemässen Art sowie ein Gerät zur Durchführung dieses Verfahrens anzugeben, welche es ermöglichen, bei Vorhandensein von Wechselspannungen auf Speise- und Leitungsseite einzuschalten, ohne dass unzulässig hohe Schaltüberspannungen auftreten.

Die Aufgabe wird in Verbindung mit den Merkmalen des Oberbegriffs gemäss den kennzeichnenden Merkmalen der Ansprüche 1 und 7 gelöst. Weiterbildungen der Erfindung sind in den abhängigen Ansprüchen angegeben.

Mit dem erfindungsgemässen Verfahren sowie dem zur Durchführung dieses Verfahrens vorgesehenen Gerät können Einschaltüberspannungen auf Werte begrenzt werden, welche die Verwendung von Einschaltwiderständen auch in verhältnismässig schwach kompensierten und/oder langen Leitungen entbehrlich machen. Am Leistungsschalter können daher zusätzliche Schaltstrecken für die Einschaltwiderstände ebenso entfallen wie die notwendige Isolationskoordination zwischen der offenen Leistungsschaltstrecke und der parallel dazu angeordneten Schaltstrecke für die Einschaltwiderstände bei Blitzeinwirkung oder Schaltspannungsbeanspruchung. Eine kostspielige und komplizierte Mechanik für den zeitlich exakt zu staffelnden Bewegungsablauf der Kontakte der Leistungs- und der Widerstandschaltstrekken ist nun ebenso entbehrlich wie der Einsatz von verhältnismässig teurem und empfindlichem keramischen Material für die Einschaltwiderstände.

Nachstehend wird ein Ausführungsbeispiel der Erfindung anhand der Zeichnungen dargestellt. Hierbei zeigt :

Fig. 1 ein Prinzipschaltbild einer dreiphasigen, von einem Leistungsschalter unterbrochenen und parallel kompensierten Leitung mit einem einen Pol des Leistungsschalters steuernden erfindungsgemässen Wiedereinschaltgerät,

Fig. 2 eine graphische Darstellung der in einem Phasenleiter der Leitung gemäss Fig. 1 wirkenden Leitungsspannung und einer über den Leistungsschalter auf die Leitung schaltbaren Speisespannung in Funktion der Zeit,

Fig. 3 eine graphische Darstellung von Leitungs- und Speisespannung ähnlich Fig. 2, aus welcher ersichtlich ist, bei welcher Bedingung Leitungs- und Speisespannung gleiche Polarität haben,

Fig. 4 eine Ausführungsform einer im erfindungsgemässen Wiedereinschaltgerät verwendeten Messschaltung, und

Fig. 5 eine Ausführungsform eines der Messschaltung gemäss Fig. 4 nachgeschalteten Rechenwerks des erfindungsgemässen Wiedereinschaltgerätes.

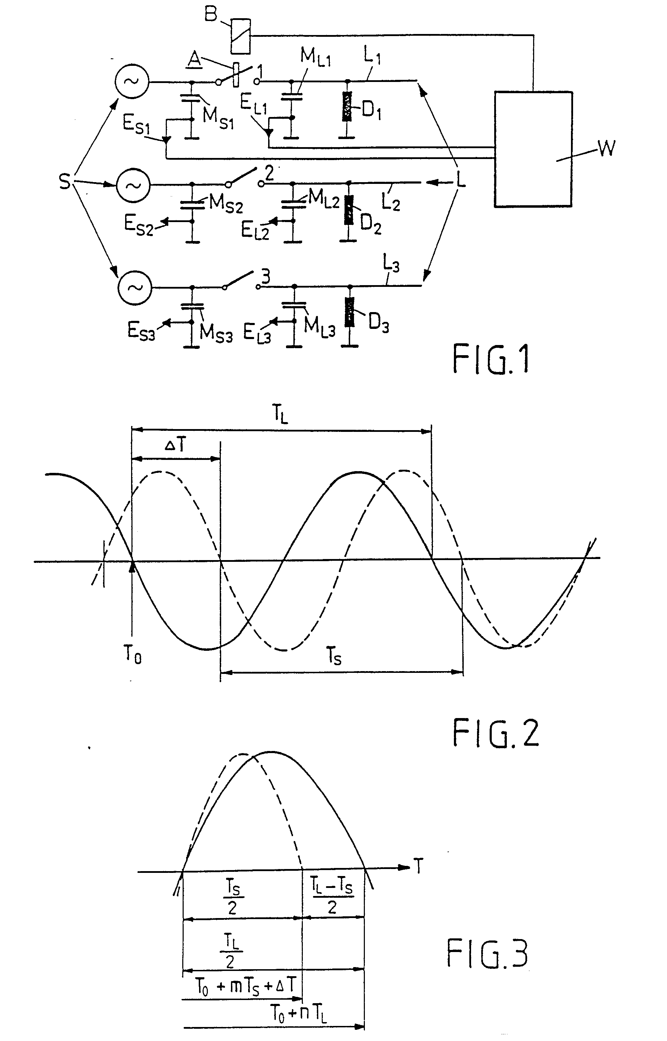

In Fig. 1 bezeichnen $L_1$, $L_2$ und $L_3$ drei Phasenleiter einer an beiden Enden abgeschalteten und z. B. über Drosseln $D_1$, $D_2$ und $D_3$ parallel kompensierten Leitung L. Diese Drosseln können auch als dreiphasige Einheit ausgeführt sein. Das linke Ende der Leitung L ist über einen dreipoligen Leistungsschalter A mit einer dreiphasigen Spannungsquelle S verbindbar. Beispielsweise kapazitiv wirkende Messwandler $M_{S1}$, $M_{S2}$, und $M_{S3}$ sowie $M_{L1}$, $M_{L2}$ und $M_{L3}$ liefern den von den Phasen der Spannungsquelle S abgegebenen Speisespannungen proportionale Signale $E_{S1}$, $E_{S2}$ und $E_{S3}$ sowie den auf den Phasenleitern $L_1$, $L_2$ und $L_3$ wirkenden Leiterspannungen proportionale Signale $E_{L1}$, $E_{L2}$ und $E_{L3}$. Die von den Messwandlern $M_{S1}$ und $M_{L1}$ abgegebenen Signale $E_{S1}$ und $E_{L1}$ werden einem Wiedereinschaltgerät W zugeführt, dessen Ausgang an ein Erregerorgan B eines Pols 1 des Leistungsschalters A gelegt ist. Das Erregerorgan B wird durch Abgabe eines vom Gerät W erzeugten

2

Wiedereinschaltbefehls aktiviert und bewirkt sodann das Wiedereinschalten des Pols 1 des Leistungsschalters A. Die Pole 2 und 3 des Leistungsschalters A werden jeweils durch je ein weiteres nicht dargestelltes identisches Wiedereinschaltgerät gesteuert.

Die Spannungen auf der Leitung L schwingen nach dem in Fig. 1 dargestellten Oeffnen des Leistungsschalters A mit einer dominierenden Frequenz, welche niedriger als die Frequenz der Speisespannung ist. Dies ist dadurch bedingt, dass die durch die Speisequelle S vorgeladene Kapazität der Leitung L mit den Drosseln $D_1$, $D_2$ und $D_3$ einen Schwingkreis bildet, welcher beim Oeffnen des Leistungsschalters A mit einer durch die Drosseln $D_1$, $D_2$ und $D_3$ bedingten Eigenfrequenz schwingt. Um nun zu vermeiden, dass der Leistungsschalter A bei Gegenpolarität von Speise- und Leitungsspannung schaltet, werden erfindungsgemäss Verfahrensschritte angegeben, welche eine Wiedereinschaltung bei gleicher Polarität von Speise- und Leitungsspannung stets mit grosser Sicherheit ermöglichen. Dies wird anhand der Figuren 2 und 3 erläutert.

Um ein gesteuertes Wiedereinschalten zu ermöglichen, ist es zunächst notwendig, Leitungs- und Speisespannung pro Phase fortlaufend zu messen. In Fig. 2 sind der zeitliche Verlauf der (durchgezogen gezeichneten) Leitungsspannung und der (gestrichelt gezeichneten) höherfrequenten Speisespannung einer Phase dargestellt. In dieser Figur bedeutet $T_0$ den Referenzpunkt, von dem aus der Zeitpunkt für eine Wiedereinschaltung bestimmt wird. Der Punkt $T_0$ ist durch einen Nulldurchgang der Leitungsspannung festgelegt. $T_L$ und $T_S$ bedeuten die zuvor durch Nulldurchgangsmessungen ermittelten Periodendauern von Leitungs- und Speisespannung. Zusätzlich ist noch die Zeit $\Delta T$ angegeben, die vom ersten Nulldurchgang der Leitungsspannung zum Zeitpunkt $T_0$ bis zu demjenigen Nulldurchgang der Speisespannung vergeht, ab dem die Speisespannung gleiche Polarität aufweist wie die Leitungsspannung in der Halbperiode, die $T_0$ folgt.

Die Speisespannung hat für alle Zeitpunkte $T_n - T_0 = \Delta T + m\,T_S$ eine Halbwelle gleicher Polarität wie die Leitungsspannung, für die folgende Wiedereinschaltbedingung gilt:

$$|nT_L - (\Delta T + mT_S)| \leqslant (T_L - T_S)/2,$$

wobei n, m = 1, 2, 3, ...

Der Grund hierfür ist folgender:

Da die Leitungsspannung zur Zeit $T_0$ mit der gleichen Polarität zu schwingen beginnt wie die Speisespannung zum Zeitpunkt $T_0 + \Delta T$, schwingen beide nach $nT_L$ bzw. $mT_S$ mit der gleichen Polarität. Daher haben sie in der Halbperiode unmittelbar vor dem Nulldurchgang zur Zeit $T_0 + nT_L$ bzw. $T_0 + mT_S + \Delta T$ gleiche Polarität, wenn $nT_L \geqslant mT_S + \Delta T$. Dies ist aus Fig. 3 ersichtlich. Ist $nT_L \leqslant \Delta T + mT_S$ und die Wiedereinschaltbedingung erfüllt, dann haben Speise- und Leitungsspannung gleiche Polarität in der dem Zeitpunkt $T_0 + \Delta T + mT_S$ folgenden Halbperiode der Speisespannung. Die vorgenannte Bedingung sichert dann, dass die höherfrequente Halbwelle der Speisespannung ganz in einer niederfrequenten Halbwelle gleicher Polarität der Leitungsspannung enthalten ist, so dass ein Wiedereinschalten bei gleicher Polarität von Leitungs- und Speisespannung gewährleistet ist.

Ein Leistungsschalter besitzt jedoch eine mechanische Eigenzeit, die zudem statistisch streut. Es sei fortan mit $T_{mech}$ der Mittelwert der mechanischen Eigenzeit eines Schalterpols bezeichnet. Für einen mechanischen Leistungsschalter muss die vorgenannte Wiedereinschaltbedingung noch um die Bedingung

$$(\Delta T + mT_S) > T_{mech} + \frac{T_S}{4}$$

ergänzt werden, wobei vorausgesetzt ist, dass die Eigenzeit $T_{el}$ eines hierbei verwendeten elektronischen Wiedereinschaltgeräts vernachlässigbar ist gegenüber den mechanischen Eigenzeiten des Schalters und den Periodendauern $T_L$ und $T_S$.

Für jedes Paar m, n, für das die beiden vorstehenden Bedingungen erfüllt sind, bestimmt sich die Zeit, da der EIN-Befehl an den Leistungsschalter gegeben wird, dann aus

$$t_E = T_0 + (\Delta T + mT_S) - \left( T_{mech} + \frac{T_S}{4} \right), \quad \text{für} \quad nT_L \geqslant \Delta T + mT_S$$

$$t_E = T_0 + (\Delta T + mT_S) - T_{mech} + \frac{T_S}{4}, \quad \text{für} \quad nT_L \leqslant \Delta T + mT_S.$$

Bei Berücksichtigung der Eigenzeit $T_{el}$ des Wiedereinschaltgerätes bestimmt sich diese Zeit dann aus

$$t_E' = T_0 - (\Delta T + mT_S) - \left( T_{mech} - \frac{T_S}{4} \right) - T_{el}, \quad \text{für} \quad nT_L \geqslant \Delta T + mT_S$$

$$t_E' = T_0 - (\Delta T + mT_S) - T_{mech} + \frac{T_S}{4} - T_{el}, \quad \text{für} \quad nT_L \leqslant \Delta T + mT_S.$$

3

Wird ein EIN-Befehl zur Zeit $t_E$ gegeben, so liegt der Mittelwert der Einschaltzeitpunkte im Spannungsmaximum der Speisespannung. Da die Leitungsspannung dann gleiche Polarität hat, ist die Spannungsdifferenz über dem Schalter beim Einschalten sehr klein (siehe Fig. 3).

Das erfindungsgemäss gesteuerte Wiedereinschalten kann beispielsweise mit einem Mikrorechner mit programmierter Suchschleife durchgeführt werden. Der Index m wird hierbei bei jedem Durchlaufen der Schleife um l erhöht und bei jedem Durchlauf wird die Wiedereinschaltbedingung abgefragt. Wird $(mT_s + \Delta T) \geq nT_L$ ohne dass die Wiedereinschaltbedingung erfüllt ist, so wird n um eins erhöht und die m-Schleife wieder durchlaufen bis die Wiedereinschaltbedingung erfüllt ist.

Die die mechanische Eigenzeit des Leistungsschalters berücksichtigende Bedingung kann bereits durch die Anfangsbedingung erfüllt sein. Statt mit n = 1 wird mit n = $n_{min}$ begonnen, wobei $n_{min}$ die kleinste ganze Zahl ist, für die gilt

$$n_{min}\, T_L > T_{mech} + \frac{T_s}{4}$$

Die Wiedereinschaltbedingung kann aber auch durch zwei Zähler ermittelt werden. Ein Zähler zählt um $T_S$ weiter und ist

$$mT_s > nT_L$$

wird im zweiten Zähler um $T_L$ weitergezählt. Der Zählerstand kann kontinuierlich auf die Wiedereinschaltbedingung abgefragt werden. Um den Suchvorgang zu beschleunigen, können $T_S$ und $T_L$ um einen konstanten gemeinsamen Faktor verkleinert werden. Damit können die Perioden schneller weitergezählt werden.

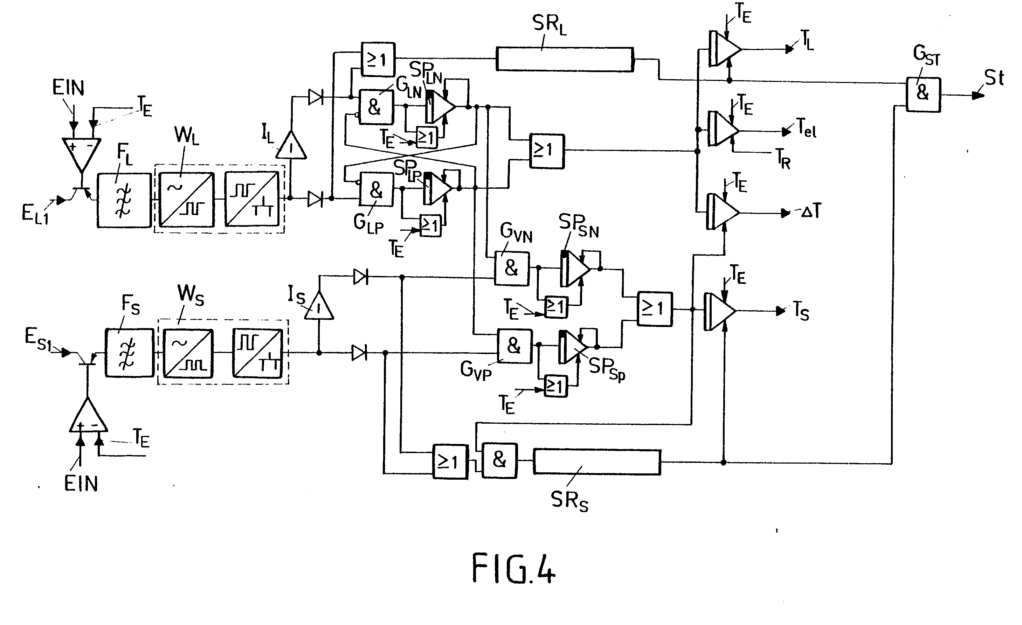

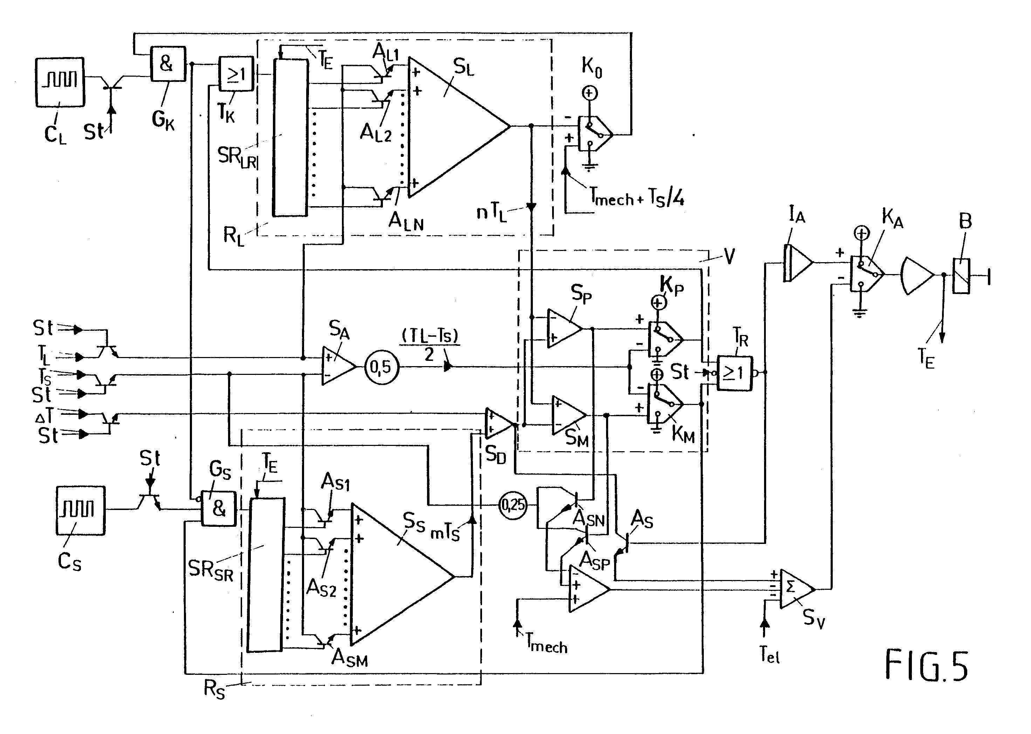

In den Figuren 4 und 5 ist eine das erfindungsgemässe Verfahren ausführende Schaltungsanordnung in detaillierter Form angegeben. Hierbei sind in der Fig. 4 eine die Periodendauern $T_L$ und $T_S$ von Leitungsspannung und Speisespannung sowie die Zeit $\Delta T$ ermittelnde Messschaltung und in Fig. 5 ein der Messschaltung nachgeschaltetes in Analogtechnik ausgeführtes Rechenwerk dargestellt, welches aus den in der Messschaltung ermittelten Grössen unter Berücksichtigung der Wiedereinschaltbedingung sowie der Eigenzeiten $T_{mech}$ und $T_{el}$ den Wiedereinschaltpunkt $t_E$ bestimmt.

Bei der in Fig. 4 dargestellten Messschaltung bezeichnen $F_L$ und $F_S$ Tiefpassfilter, die jeweils einem Signalwandler $W_L$ bzw. $W_S$ vorgeschaltet sind. Der Ausgang des Signalwandlers $W_L$ ist einerseits über einen Inverter $I_L$ und eine diesem Inverter nachgeschaltete Diode an einen von zwei Eingängen eines UND-Gliedes $G_{LN}$, dessen Ausgang auf einen steuerbaren Speicher $SP_{LN}$ wirkt, sowie an einen von zwei Eingängen eines einem Schieberegister $SR_L$ vorgeschalteten ODER-Gliedes geführt und andererseits über eine weitere Diode an einen von zwei Eingängen eines weiteren UND-Gliedes $G_{LP}$, dessen Ausgang auf einen steuerbaren Speicher $SP_{LP}$ wirkt sowie an den zweiten Eingang des dem Schieberegister $SR_L$ vorgeschalteten ODER-Gliedes. Der Ausgang des Signalwandlers $W_S$ ist einerseits über einen Inverter $I_S$ und eine diesem Inverter nachgeschaltete Diode an einen von zwei Eingängen eines UND-Gliedes $G_{VN}$, dessen Ausgang auf einen steuerbaren Speicher $SP_{SN}$ wirkt, sowie an einen von zwei Eingängen eines einem Schieberegister $SR_S$ vorgeschalteten ODER-Gliedes geführt und andererseits über eine weitere Diode an einen von zwei Eingängen eines UND-Gliedes $G_{VP}$, dessen Ausgang auf einen steuerbaren Speicher $SP_{SP}$ wirkt, und den anderen Eingang des dem Schieberegister $SR_S$ vorgeschalteten ODER-Gliedes. Zwischen dem dem Schieberegister $SR_S$ vorgeschalteten ODER-Glied und dem Schieberegister $SR_S$ befindet sich ein UND-Glied, auf dessen einen Eingang der Ausgang eines den steuerbaren Speichern $SP_{SN}$ und $SP_{SP}$ nachgeschalteten ODER-Gliedes wirkt, dessen Ausgang auch auf den Eingang eines steuerbaren Integrators für die Periodendauer $T_S$ und den Halteeingang eines steuerbaren Integrators für $\Delta T$ geschaltet ist. Die Ausgänge der steuerbaren Speicher $SP_{LN}$ und $SP_{LP}$ sind jeweils an einen von zwei Eingängen eines ODER-Gliedes, dessen Ausgang auf die Eingänge von steuerbaren Integratoren für die Periodendauer $T_L$, die elektronische Eigenzeit $T_{el}$ und die Zeitspanne $\Delta T$ wirkt, geführt. Der Ausgang $SP_{LN}$ ist darüber hinaus auch an einen invertierenden Eingang des UND-Gliedes $G_{LP}$ sowie einen Eingang des UND-Gliedes $G_{VN}$ gelegt, der Ausgang von $SP_{LP}$ zusätzlich an einen invertierenden Eingang des UND-Gliedes $G_{LN}$ und einen Eingang des UND-Gliedes $G_{VP}$. Die Ausgänge der Schieberegister $SR_L$ und $SR_S$ wirken auf ein die Abgabe des Startbefehls St für das nachgeschaltete Rechenwerk bedingendes UND-Glied $G_{ST}$ sowie die steuerbaren Integratoren für $T_L$ und $T_S$.

Das Messteil wird erst aktiviert, wenn vom Wiedereinschaltgerät ein Einschaltbefehl EIN abgegeben wird, der nicht bezeichnete Schalttransistoren durchschaltet. Dadurch gelangen die Spannungen $E_{L1}$ und $E_{S1}$, die von den Messwandlern $M_{L1}$ und $M_{S1}$ kommen, in das Gerät. Die Spannungen werden in den Wandlern $W_L$ und $W_S$ in « Nadelimpulse » umgewandelt, die sehr genau die Spannungsnulldurchgänge angeben. Die Inverter $I_L$ bzw. $I_S$ sorgen dafür, dass auch die negativen Impulse positives Vorzeichen erhalten. Die Dioden sorgen dafür, dass im Kanal für negatives Vorzeichen nur jene Impulse durchkommen, die zum negativen Vorzeichen der Schwingung gehören, und im Kanal für positives Vorzeichen nur jene Impulse, die zum positiven Vorzeichen der Schwingung gehören. Kommt nun ein Impuls der Leitungsspannung mit negativem Vorzeichen durch, so sind beide Eingänge des UND-Gliedes $G_{LN}$ aktiviert und der Ausgang von $G_{LN}$ ist Eingang des steuerbaren Speichers $SP_{LN}$ und gleichzeitig Steuereingang für den Betriebszustand « Folgen ». Der Ausgang des Speichers $SP_{LN}$ ist daher ebenfalls aktiviert und steuert $SP_{LN}$ in den Zustand « Halten », d. h. er bleibt aktiviert. Der invertierende Eingang von $G_{LP}$ steht damit auf Null und hält daher für den Rest der Messung den Ausgang des Speichers $SP_{LP}$ auf Null. Daher bleibt auch ein Eingang von $G_{VP}$ auf Null, so dass $G_{VP}$ blockiert. Nun kann ein Integrator für die Messung von $T_S$ über den negativen Kanal der Speisespannung aktiviert werden. Dies erst nach dem ersten Nulldurchgang der Leitungsspannung, denn vorher ist ein Eingang von $G_{VN}$ auf Null. Der erste Nulldurchgang der Leitungsspannung startet die Integratoren für $T_L$, $\Delta T$ und $T_{el}$.

Die Impulse der Leitungsspannung takten das Schieberegister $SR_L$. Ist der erste Wert um 3 Stellen im Schieberegister weitergeschoben worden, so sind 3 Spannungsnulldurchgänge gezählt worden und der Ausgang der 3. Stelle des Schieberegisters wird aktiviert. Damit wird der Integrator für $T_L$ in den Zustand « Halten » gesteuert und an seinem Ausgang steht $T_L$ zur Verfügung.

Sobald auch von der Speisespannung ein negativer Impuls zur Verfügung steht, wird der Ausgang von $G_{VN}$ aktiviert und damit auch der Ausgang des steuerbaren Speichers $SP_{SN}$. Damit wird der Integrator für $T_S$ gestartet und gleichzeitig der Integrator für $\Delta T$ in den Zustand « Halten » gesteuert, womit an seinem Ausgang $\Delta T$ zur Verfügung steht. Ebenso wird der Weg zum Schieberegister $SR_S$ freigegeben. Sobald im Schieberegister $SR_S$ der anstehende Wert ebenfalls um 3 Stellen weitergeschoben ist und am 3. Ausgang erscheint, wird der Integrator für $T_S$ in den Zustand « Halten » gesteuert, womit an seinem Ausgang $T_S$ ansteht.

Ist die Messung der Periodendauer sowohl der Leitungsals auch der Speiseschwingung beendet, so sind beide Eingänge des UND-Gliedes $G_{ST}$ aktiviert, und der Befehl St zum Starten des nachgeschalteten Rechenwerkes wird abgegeben.

Das in Fig. 5 dargestellte Rechenwerk weist zwei Impulserzeuger $C_L$ bzw. $C_S$ auf, deren Ausgänge jeweils über Schalttransistoren an einen ersten von zwei Eingängen von UND-Gliedern $G_K$ bzw. $G_S$ gelegt sind.

Der Ausgang von $G_K$ wirkt auf einen ersten Eingang eines einem Addierwerk $R_L$ vorgeschalteten ODER-Gliedes $T_K$. Das Addierwerk $R_L$ enthält ein Schieberegister $SR_{LR}$ mit Speicherfunktion sowie einen Summierer $S_L$ mit einer der Anzahl von Ausgängen des Schieberegisters $SR_{LR}$ entsprechenden Anzahl von Eingängen. Die Ausgänge des Schieberegisters steuern jeweils einen Schalttransistor $A_{L1}$, $A_{L2}$, ... $A_{LN}$, welcher zwischen einem Eingang des Summierers $S_L$ und einem mit dem Signal der Periodendauer $T_L$ beaufschlagten Verzweigungspunkt liegt. Die Ausgänge des Schieberegisters $SR_{LR}$ sind hierbei den Eingängen des Summierers $S_L$ derart zugeordnet, dass bei Aktivierung des Schieberegisters $SR_{LR}$ die Eingänge des Summierers $S_L$ sukzessive angesteuert werden. Der Ausgang des Summierers $S_L$ wirkt einerseits auf einen ersten Eingang eines Vergleichsgliedes V und andererseits auf einen ersten Eingang eines Komparators $K_O$, an dessen zweitem Eingang beständig ein die mechanische Eigenzeit des Leistungsschalters A berücksichtigendes Signal $T_{mech} + T_S/4$ anliegt, und dessen Ausgang mit dem zweiten Eingang von $G_K$ verbunden ist.

Der Ausgang von $G_S$ wirkt auf ein Register $R_S$. Dieses Register enthält ein Schieberegister $SR_{SR}$ mit Speicherfunktion sowie einen Summierer $S_S$ mit einer der Anzahl von Ausgängen des Schieberegisters $SR_{SR}$ entsprechenden Anzahl von Eingängen. Die Ausgänge des Schieberegisters $SR_{SR}$ steuern jeweils einen Schalttransistor $A_{S1}$, $A_{S2}$, ... $A_{SM}$, welcher zwischen einem Eingang des Summierers $S_S$ und einem mit dem Signal der Periodendauer $T_S$ beaufschlagten Verzweigungspunkt liegt. Die Ausgänge des Schieberegisters $SR_{SR}$ sind entsprechend den Ausgängen des Schieberegisters $SR_{LR}$ den Eingängen des Summierers $S_S$ zugeordnet. Der Ausgang des Summierers $S_S$ wirkt auf einen ersten Eingang eines dem Vergleichsglied V vorgeschalteten Summierers $S_D$, dessen zweiter Eingang mit einem die Zeitspanne $\Delta T$ enthaltenden Signal beaufschlagt ist, und dessen Ausgang einerseits über einen Schalttransistor $A_S$ einen ersten Eingang eines Summierers $S_V$ wirkt und andererseits auf einen zweiten Eingang des Vergleichsgliedes V.

Das Vergleichsglied weist einen dritten Eingang auf, an dem ein durch einen Summierer $S_A$ und ein nachgeschaltetes Koeffizientenpotentiometer gebildetes Signal $(T_L — T_S)/2$ anliegt. Ein erster Ausgang des Vergleichgliedes V wirkt auf einen ersten Eingang eines negierten ODER-Gliedes $T_R$ sowie den zweiten Eingang von $T_K$, ein zweiter Ausgang auf einen zweiten Eingang von $T_R$ sowie den zweiten Eingang von $G_S$, ein dritter Ausgang auf einen Schalter $A_{SP}$ und ein vierter Ausgang auf ein Schalter $A_{SN}$. Der Ausgang von $T_R$ wirkt einerseits auf den Schalter $A_S$ und andererseits auf einen Integrator $I_A$, dessen Ausgang mit einem ersten von zwei Eingängen eines Komparators $K_A$ verbunden ist. Der Ausgang des Komparators $K_A$ beaufschlagt über einen Verstärker des Erregerorgan B des Leistungsschalters.

Das Vergleichglied V weist zwei Summierer $S_p$ und $S_M$ auf. Erste Eingänge dieser Summierer sind mit dem Ausgang des Addierwerks $R_L$ verbunden, wobei am ersten Eingang des Summierers $S_p$ das vom Addierwerk $R_L$ kommende Signal negativ gemacht wird. Zweite Eingänge der Summierer $S_p$ und $S_M$ sind mit dem Ausgang des Summierers $S_D$ verbunden. Hierbei wird das vom zweiten Eingang des Summierers $S_M$ aufgenommene Signal negativ gemacht. Die Ausgänge der Summierer $S_p$ und $S_M$ wirken auf erste Eingänge zweier Komparatoren $K_p$ und $K_M$, an deren zweiten Eingängen das Signal $(T_L — T_S)/2$ anliegt, und deren Ausgänge auf die Eingänge von $T_R$ wirken.

Sobald die Messschaltung das Startsignal St erzeugt, schalten bei diesem Rechenwerk die zwischen

5

den Impulsgeneratoren $C_L$ und $C_S$ und den UND-Gliedern $G_L$ und $G_K$ befindlich Schalttransistoren sowie weitere den Summierern $S_A$ und $S_D$ vorgeschaltete Transistoren durch. Das Signal $T_L$ steht nun an den Schalttransistoren $A_{L1}$, ..., $A_{LN}$ des Summierers $S_L$ an, das Signal $T_S$ entsprechend an den Schalttransistoren $A_{S1}$, ..., $A_{SM}$ des Summierers $S_S$. Solange keiner dieser Transistoren durchgeschaltet hat, ist der Ausgang des Summierers $S_L$ Null und der Ausgang des Komparators $K_O$ bleibt aktiviert. Bei jedem Impuls aus dem Impulsgenerator $C_L$ wird $G_K$ daher solange aktiviert bleiben, solange das Signal am Ausgang von $S_L$ kleiner $T_{mech} + T_S/4$ ist, d. h. das Schieberegister $SR_{LR}$ wird getaktet und schaltet mit jedem Taktimpuls den jeweils nächsten der Schalttransistoren $A_{Li}$, wobei $i = 1, ... N$, durch und legt so an einen neuen Eingang des Summierers $S_L$ das Signal $T_L$. Sobald der Ausgang des Summierers $S_L$ grösser als $T_{mech} + T_S/4$ ist, geht der Ausgang des Komparators $K_O$ auf Null und damit blockiert $G_K$. Das Schieberegister $SR_{LR}$ kann von Impulsgenerator nicht mehr getaktet werden. Am Ausgang des Summierers $S_L$ steht $n_{min} T_L > T_{mech} + T_S/4$. Der invertierende Eingang von $G_S$ ist aktiviert, d. h. $G_S$ blockiert nicht mehr. Am Ausgang des Summierers $S_M$ steht das Signal $(n_{min} \cdot T_L - \Delta T)$ an, welches grösser als das Signal $(T_L - T_S)/2$ ist. Der Ausgang des Komparators $K_M$ ist daher aktiviert und der Ausgang des Komparators $K_P$ blockiert. Das invertierende ODER-Glied $T_R$ ist blockiert.

Bei aktiviertem $K_M$ ist $G_S$ in der Lage jeden Impuls aus dem Impulsgenerator $I_S$ durchzulassen. Ueber das Schieberegister $SR_{SR}$, das durch diese Impulse getaktet wird, wird jeweils an einen neuen Eingang des Summierers $S_L$ das Signal $T_S$ gelegt. Am Ausgang von $S_S$ erscheint nun das Signal $mT_S$. Wird $mT_S + \Delta T > nT_L$, so wird der Ausgang des Summierers $S_M$ negativ und der Ausgang von $K_M$ geht auf Null und blockiert $G_S$. Ist zudem $(mT_S + \Delta T) - nT_L > (T_L - T_S)/2$, so wird $K_P$ aktiviert. Dadurch wird das zum Summierer $S_L$ gehörige Schieberegister $SR_{LR}$ getaktet und $nT_L$ um $T_L$ erhöht. Am Ausgang von $S_L$ erscheint $(n + 1) T_L$. Damit wird der Ausgang von $S_M$ wieder positiv. $K_M$ wird wieder aktiviert und das Schieberegister $SR_{SR}$ für den Summierer $S_S$ kann weiter getaktet werden. Ist $|-(mT_S + \Delta T) + nT_L| \leq (T_L - T_S)/2$, so sind beide Komparatoren $K_P$ und $K_M$ auf Null und $T_R$ wird aktiviert. Eine weitere Taktung der Schieberegister $SR_{LR}$, $SR_{SR}$ ist nicht mehr möglich. Der von $T_R$ angesteuerte Schalttransistor $A_S$ schaltet den Wert $mT_S + \Delta T$ am Ausgang des Summierers $S_D$ an den Summierer $S_V$.

$T_R$ steuert einen Integrator für $T_{el}$ in den Zustand « Halten » und startet den Integrator $I_A$. Am Ausgang des Summierers $S_V$ erscheint der Einschaltzeitpunkt

$$t'_E = (mT_S + \Delta T) - \left( T_{mech} + \frac{T_S}{4} \right) - T_{el}$$

oder

$$t'_E = (mT_S + \Delta T) - T_{mech} + \frac{T_S}{4} - T_{el}.$$

Sobald diese Zeit vergangen ist (Integrator $I_A$ hat diesen Wert erreicht) wird der Komparator $K_A$ aktiviert und über einen Verstärker wird das Erregerorgan B des Leistungsschalters A angesteuert. Mit dem bei Abgabe des Einschaltbefehls an das Erregerorgan B auftretenden Befehl $T_E$ werden sämtliche Elemente und Speicher zurückgesetzt und das Gerät steht für die nächste Schnellwiedereinschaltung bereit.

**Patentansprüche**

1. Verfahren zur Ermittlung des Zeitpunktes der Wiedereischaltung eines Leistungsschalters (A) auf eine beim Wiedereinschalten mit einer Speisespannung beaufschlagten Leitung (L), bei dem die Polarität der Speisespannung und die Polarität einer beim zuvor erfolgten Ausschalten des Leistungsschalters (A) auf der Leitung (L) verbliebenen Ladung erfasst und bei der Ermittlung des Wiedereinschaltzeitpunktes berücksichtigt werden, dadurch gekennzeichnet, dass bei der Ueberprüfung der Wiedereinschaltbedingung für eine parallel kompensierte Leitung (L) mit einer die Periodendauer $T_S$ der Speisespannung übertreffenden Periodendauer $T_L$ der Leitungsspannung die Periodendauer $T_L$ und $T_S$ von Leitungs- und Speisespannung und die Zeitverschiebung $\Delta T$ zwischen aufeinanderfolgenden Nulldurchgängen von Leitungs- und Speisespannung bei gleichen Polaritäten dieser Spannungen bestimmt werden, und dass mit den solchermassen erfassten Grössen eine Wiedereinschaltbedingung gemäss dem Algorithmus

$$| nT_L - (\Delta T + mT_S) | \leq (T_L - T_S)/2$$

durch systematisches Abfragen mit natürlichen Zahlen m und n überprüft und nach Erfüllung der Wiedereinschaltbedingung der Zeitpunkt ($t_E$) der Wiedereinschaltung ermittelt wird.

2. Verfahren nach Anspruch 1, dadurch gekennzeichnet, dass nach Ermittlung der Nulldurchgänge von Leitungs- und Speisespannung bei gleichen Polaritäten dieser Spannung zunächst m beginnend mit eins fortlaufend um eins erhöht und nach jeder Erhöhung die Wiedereinschaltbedingung abgefragt wird, und dass bei Erfüllen einer Zusatzbedingung gemäss dem Algorithmus

$$(mT_S + \Delta T) > nT_L,$$

ohne dass die Wiedereinschaltbedingung erfüllt ist, n um eins erhöht wird und die Wiedereinschaltbedingung unter Berücksichtigung der Zusatzbedingung durch entsprechendes Abfragen mit jeweils um eins erhöhtem m überprüft wird.

3. Verfahren nach Anspruch 2, dadurch gekennzeichnet, dass die kleinste natürliche Zahl $n_{min}$, mit der die Ueberprüfung der Wiedereinschaltbedingung eingeleitet wird, durch die Bedingung

$$n_{min} T_L > T_{mech} + \frac{T_S}{4}$$

festgelegt ist, wobei $T_{mech}$ die mechanische Eigenzeit des Leistungsschalters (A) bedeutet.

4. Verfahren nach Anspruch 2, dadurch gekennzeichnet, dass die kleinste natürliche Zahl $n_{min}$, mit der die Ueberprüfung der Wiedereinschaltbedingung eingeleitet wird, durch die Bedingung

$$n_{min} T_L > T_{mech} + \frac{T_S}{4} + T_{el},$$

festgelegt ist, wobei

$T_{mech}$ die mechanische Eigenzeit des Leistungsschalters (A) und
$T_{el}$ die elektronische Eigenzeit des hierbei verwendeten Wiedereinschaltgerätes (W) bedeuten.

5. Verfahren nach Anspruch 1, dadurch gekennzeichnet, dass bei der Ueberprüfung der Wiedereinschaltbedingung für eine parallel kompensierte Leitung (L) mit einer die Periodendauer der Speisespannung übertreffenden Periodendauer der Leitungsspannung nach Ermittlung der Nulldurchgänge von Leitungs- und Speisespannung bei gleicher Polarität dieser Spannungen zunächst m beginnend mit eins in einem ersten Zähler fortlaufend um eins erhöht und nach jeder Erhöhung die Wiedereinschaltbedingung abgefragt wird, und dass bei Erfüllen einer Zusatzbedingung gemäss dem Algorithmus

$$mT_S > nT_L,$$

ohne dass die Wiedereinschaltbedingung erfüllt ist, n in einem zweiten Zähler um eins erhöht wird und die Wiedereinschaltbedingung unter Berücksichtigung der Zusatzbedingung durch entsprechendes Abfragen mit jeweils um eins erhöhtem m überprüft wird.

6. Verfahren nach Anspruch 5, dadurch gekennzeichnet, dass die Periodendauern $T_L$ und $T_S$ von Leitungs- und Speisespannung um einen konstanten beiden Periodendauern $T_L$ und $T_S$ gemeinsamen Faktor verkleinert werden.

7. Wiedereinschaltgerät zur Durchführung des Verfahrens nach Anspruch 1 gekennzeichnet durch eine die Periodendauern ($T_L$ und $T_S$) sowie die Zeitverschiebung ($\Delta t$) erfassende Messschaltung und ein der Messschaltung nachgeschaltetes Rechenwerk, in welchem die Wiedereinschaltbedingung überprüft und der Wiedereinschaltzeitpunkt ($t_E$) ermittelt wird.

8. Wiedereinschaltgerät nach Anspruch 7, dadurch gekennzeichnet, dass das Rechenwerk ein die Ueberprüfung der Wiedereinschaltbedingung ausführendes Vergleichsglied (V) mit mindestens drei Eingängen aufweist, von denen ein erster Eingang mit dem Ausgang eines das Signal $nT_L$ bildenden getakteten ersten Addierwerkes ($R_L$), ein zweiter Eingang mit dem Ausgang eines das Signal $mT_S$ bildenden getakteten zweiten Addierwerkes ($R_S$) und ein dritter Eingang mit dem Ausgang eines das Signal ($T_L - T_S$)/2 bildenden Summier- und Multiplizierwerkes (Summierer $S_A$) in Wirkverbindung steht.

9. Wiedereinschaltgerät nach Anspruch 8, dadurch gekennzeichnet, dass mindestens eines der Addierwerke ($R_L$, $R_S$) ein getaktetes Schieberegister ($SR_{LR}$, $SR_{SR}$) und einen Summierer ($S_L$, $S_R$) enthält, dessen Eingänge jeweils über einen steuerbaren Schalter (z. B. Transistorschalter $A_{LN}$ stets mit dem gleichen Signal (z. B. $T_L$) beaufschlagbar sind, und dass jeder dieser Schalter (z. B. $A_{LN}$) von jeweils einem Ausgang des Schieberegisters ($SR_{LR}$, $SR_{SR}$) derart gesteuert wird, dass mit jedem Taktimpuls des Schieberegisters ($SR_{LR}$, $SR_{SR}$) dieses Signal (z. B. $T_L$) an den nächstfolgenden Eingang des Summierers ($S_L$, $S_R$) geschaltet wird.

10. Wiedereinschaltgerät nach Anspruch 7, dadurch gekennzeichnet, dass der erste Eingang des Vergleichsgliedes (V) mit einem negativen Eingang eines ersten Summierers ($S_P$) und einem positiven Eingang eines zweiten Summierers ($S_M$) und der zweite Eingang des Vergleichsgliedes (V) mit einem positiven Eingang des ersten Summierers ($S_P$) und einem negativen Eingang des zweiten Summierers ($S_M$) verbunden sind, und dass der dritte Eingang des Vergleichsgliedes (V) auf negativen Eingängen zweier Komparatoren ($K_P$ und $K_M$) wirkt, bei denen der positive Eingang eines ersten Komparators ($K_P$) mit dem Ausgang des ersten Summierers ($S_P$) und der positive Eingang des zweiten Komparators ($K_M$) mit dem Ausgang des zweiten Summierers ($S_M$) verbunden ist, und bei denen der Ausgang des ersten Komparators ($K_M$) auf einen Eingang des ersten Addierwerks ($R_L$) und der Ausgang des zweiten Komparators ($K_M$) auf einen Eingang des zweiten Addierwerkes ($R_S$) wirken und beide Ausgänge mit einem den Wiedereinschaltzeitpunkt ($t_E$) bestimmenden Zeitglied (Integrator $I_A$, Komparator $K_A$) und

7

**0 152 739**

einem die Berechnung des Wiedereinschaltzeitpunktes ($t_E$) steuernden Schalters ($A_S$) in Wirkverbindung stehen.

11. Wiedereinschaltgerät nach einem der Ansprüche 8 bis 10, dadurch gekennzeichnet, dass der Ausgang des ersten Addierwerkes ($R_L$) am Eingang eines weiteren Vergleichsgliedes (Komparator $K_O$) liegt, welches ein das erste Addierwerk ($R_L$) blockierendes Signal abgibt, sobald am Ausgang des ersten Addierwerks ($R_L$) ein Signal $nT_L$ erscheint, das grösser als das Signal $T_{mech} + T_S/4$ ist, wobei $T_{mech}$ die mechanische Eigenzeit des Leistungsschalters (A) bedeutet.

## Claims

1. Method for determining the time of reclosing of a circuit breaker (A) on a line (L) to which a feed voltage is applied on reclosure, in which method the polarity of the feed voltage and the polarity of a load, which has remained on the line (L) when the circuit breaker (A) had been previously opened, are detected and are taken into consideration during the determination of the reclosing time, wherein, during the checking of the reclosing condition for a shunt-compensated line (L) with a period $T_L$ of the line voltage exceeding the period $T_S$ of the feed voltage, the period $T_L$ and $T_S$ of line and feed voltage and the time displacement $\Delta T$ between successive zero transitions of line and feed voltage are determined at the same polarities of these voltages and, using the quantities detected in this manner, a reclosing condition is checked in accordance with the algorithm

$$|nT_L - (\Delta T + mT_S)| \leqslant (T_L - T_S) / 2$$

by systematic interrogation with natural numbers m and n and the time ($t_E$) of reclosing is determined after the reclosing condition has been satisfied.

2. Method as claimed in claim 1, wherein after determination of the zero transitions of line and feed voltage at the same polarities of this voltage, first m is continuously incremented by one, beginning at one, and after each incrementation the reclosing condition is interrogated, and if an additional condition according to the algorithm

$$(mT_S + \Delta T) > nT_L$$

is satisfied without the reclosing condition being satisfied, n is incremented by one and the reclosing condition is checked with m incremented in each case by one, taking into consideration the additional condition by appropriate interrogation.

3. Method as claimed in claim 2, wherein the smallest natural number $n_{min}$, with which the checking of the reclosing condition is initiated, is determined by the condition

$$n_{min} T_L > T_{mech} + \frac{T_S}{4}$$

where $T_{mech}$ is the mechanical delay of the circuit breaker (A).

4. Method as claimed in claim 2, wherein the smallest natural number $n_{min}$, with which the checking of the reclosing condition is initiated, is determined by the condition

$$n_{min} T_L > T_{mech} + \frac{T_S}{4} + T_{el} ,$$

where $T_{mech}$ is the mechanical delay of the circuit breaker (A) and $T_{el}$ is the electronic delay of the reclosing device (W) used in this connection.

5. Method as claimed in claim 1, wherein, during the checking of the reclosing condition for a shunt-compensated line (L) with a period of the line voltage which exceeds the period of the feed voltage, after determination of the zero transitions of line and feed voltage with the same polarity of these voltages, m is first continuously incremented by one in a first counter, beginning at one, and after each incrementation the reclosing condition is interrogated, and if an additional condition according to the algorithm

$$mT_S > nT_L,$$

is satisfied without the reclosing condition being satisfied, n is incremented by one in a second counter and the reclosing condition is checked by appropriate interrogation with m incremented in each case by one, taking into consideration the additional condition.

6. Method as claimed in claim 5, wherein the periods $T_L$ and $T_S$ of line and feed voltage are reduced by a constant factor which is common to both periods $T_L$ and $T_S$.

7. Reclosing device for carrying out the method as claimed in claim 1, including a measuring circuit which detects the periods ($T_L$ and $T_S$) and the time displacement ($\Delta T$), and an arithmetic unit which follows the measuring circuit and in which the reclosing condition is checked and the reclosing time ($t_E$) is determined.

8. Reclosing device as claimed in claim 7, wherein the arithmetic unit has a comparison element (V) which carries out the checking of the reclosing condition and which has at least three inputs, a first input of which is effectively connected to the output of a clocked first adding unit ($R_L$) which forms the signal $nT_L$, a second input is effectively connected to the output of a clocked second adding unit ($R_S$) which forms the signal $mT_S$, and a third input is effectively connected to the output of a summing and multiplying unit (summer $S_A$) which forms the signal $(T_L - T_S)/2$.

9. Reclosing device as claimed in claim 8, wherein at least one of the adding units ($R_L$, $R_S$) contains a clocked shift register ($SR_{LR}$, $SR_{SR}$) and a summer ($S_L$, $S_R$) with the inputs of which the same signal (for example $T_L$) can always be applied in each case via a controllable switch (for example transistor switch $A_{LN}$), and each of these switches (for example $A_{LN}$) is controlled by in each case one output of the shift register ($SR_{LR}$, $SR_{SR}$), in such a manner that this signal (for example $T_L$) is connected to the next following input of the summer ($S_L$, $S_R$) with each clock pulse of the shift register ($SR_{LR}$, $SR_{SR}$).

10. Reclosing device as claimed in claim 7, wherein the first input of the comparison element (V) is connected to a negative input of a first summer (Sp) and to a positive input of a second summer ($S_M$) and the second input of the comparison element (V) is connected to a positive input of the first summer (Sp) and a negative input of the second summer ($S_M$), and the third input of the comparison element (V) acts on negative inputs of two comparators (Kp and $K_M$) in which the positive input of a first comparator (Kp) is connected to the output of the first summer (Sp) and the positive input of the second comparator ($K_M$) is connected to the output of the second summer ($S_M$) and in which the output of the first comparator ($K_M$) acts on an input of the first adding unit ($R_L$) and the output of the second comparator ($K_M$) acts on an input of the second adding unit ($R_S$) and both outputs are effectively connected to a timing element (integrator $I_A$, comparator $K_A$) determining the reclosing time ($t_E$) and to a switch ($A_S$) which controls the calculation of the reclosing time ($t_E$).

11. Reclosing device as claimed in one of claims 8 to 10, wherein the output of the first adding unit ($R_L$) is connected to the input of another comparison element (comparator $K_O$) which emits a signal blocking the first adding unit ($R_L$) as soon as a signal $nT_L$ which is greater than the signal $T_{mech} + T_S/4$ appears at the output of the first adding unit ($R_L$), where $T_{mech}$ is the mechanical delay of the circuit breaker (A).

## Revendications

1. Procédé pour déterminer l'instant du réenclenchement d'un interrupteur de puissance (A) sur une ligne (L) alimentée par une tension d'alimentation lors du réenclenchement, selon lequel la polarité de la tension d'alimentation et la polarité d'une charge restant sur la ligne (L) lors d'une mise hors circuit précédente de l'interrupteur de puissance (A) sont détectées et sont prises en compte lors de la détermination de l'instant de réenclenchement, caractérisé en ce que, lors de la vérification de la condition de réenclenchement pour une ligne compensée en parallèle (L) avec une durée de période $T_L$ de la tension d'alimentation dépassant la durée de période $T_S$ de cette tension d'alimentation, les durées des périodes $T_L$ et $T_S$ des tensions de ligne d'alimentation et la différence de temps $\Delta T$ entre des passages par zéro successifs des tensions de ligne et d'alimentation sont déterminées pour les mêmes polarités de ces tensions et qu'à l'aide des grandeurs déterminées de cette façon, une condition de réenclenchement selon l'algorithme :

$$| nT_L - (\Delta T + mT_S) | \leq (T_L - T_S)/2$$

est vérifiée par interrogation systématique avec des nombres naturels m et n et lorsque la condition de réenclenchement est satisfaite, l'instant ($t_E$) du réenclenchement est déterminé.

2. Procédé suivant la revendication 1, caractérisé en ce qu'après détermination des passages par zéro des tensions de ligne et d'alimentation, pour les mêmes polarités de ces tensions, m est d'abord incrémenté de manière récurrente d'une unité et après chaque incrémentation, la condition de réenclenchement est vérifiée et que lorsqu'une condition supplémentaire selon l'algorithme

$$(mT_S + \Delta T) > nT_L,$$

est remplie sans que la condition de réenclenchement le soit, n est incrémenté d'une unité et la condition de réenclenchement est vérifiée en tenant compte de la condition supplémentaire par une interrogation correspondante au moyen de m chaque fois incrémenté d'une unité.

3. Procédé suivant la revendication 2, caractérisé en ce que le plus petit nombre naturel $n_{min}$ par lequel la vérification de la condition de réenclenchement est introduite, est fixé par la condition

$$n_{min} T_L > T_{mech} - \frac{T_S}{4}.$$

où $t_{mech}$ désigne le temps de manœuvre mécanique de l'interrupteur de puissance (A).

4. Procédé suivant la revendication 2, caractérisé en ce que le plus petit nombre naturel $n_{min}$ par lequel la vérification de la condition de réenclenchement est introduite, est fixé par la condition

$$n_{min} T_L > T_{mech} + \frac{T_S}{4} + T_{el},$$

où $T_{mech}$ est le temps de manœuvre mécanique de l'interrupteur de puissance (A), et tel est le temps de manœuvre électronique de l'appareil de réenclenchement (W) utilisé.

5. Procédé suivant la revendication 1, caractérisé en ce que lors de la vérification de la condition de réenclenchement pour une ligne à compensation parallèle (L) à durée de période de la tension de ligne dépassant la durée de période de la tension d'alimentation, après détermination des passages par zéro des tensions de ligne et d'alimentation, pour la même polarité de ces tensions, m est d'abord incrémenté de manière récurrente d'une unité, en commençant à un, dans un premier compteur et, après chaque incrémentation, la condition de réenclenchement est vérifiée, et lorsqu'une condition supplémentaire conforme à l'algorithme

$$mT_S > nT_L,$$

est remplie sans que la condition de réenclenchement soit remplie, n est incrémenté d'une unité dans un second compteur et la condition de réenclenchement est vérifiée en tenant compte de la condition supplémentaire par une interrogation correspondante au moyen de m chaque fois incrémenté d'une unité.

6. Procédé suivant la revendication 5, caractérisé en ce que les durées de périodes $T_L$ et $T_S$ des tensions de ligne et d'alimentation sont diminuées d'un facteur constant commun aux deux durées de périodes $T_L$ et $T_S$.

7. Appareil de réenclenchement pour la réalisation du procédé suivant la revendication 1, caractérisé par un circuit de mesure détectant les durées de périodes ($T_L$ et $T_S$) ainsi que la différence de temps ($\Delta T$) et une unité de calcul suivant le circuit de mesure, dans laquelle la condition de réenclenchement est vérifiée et l'instant de réenclenchement ($t_E$) est déterminé.

8. Appareil de réenclenchement suivant la revendication 7, caractérisé en ce que l'unité de calcul comporte un élément comparateur (V) effectuant la vérification de la condition de réenclenchement et comportant au moins trois entrées, parmi lesquelles une première entrée est connectée à la sortie d'un premier additionneur rythmé ($R_M$) formant le signal $nT_L$, une deuxième entrée est connectée à la sortie d'un deuxième additionneur rythmé ($R_S$) formant le signal $mT_S$ et une troisième entrée est connectée à la sortie d'un sommateur et multiplicateur (sommateur $S_A$) formant le signal $(T_L - T_S)/2$.

9. Appareil de réenclenchement suivant la revendication 8, caractérisé en ce qu'au moins un des additionneurs ($R_L$, $R_S$) contient un registre à décalage rythmé ($SR_{LR}$, $SR_{SR}$) et un sommateur ($S_L$, $S_R$) dont les entrées peuvent être sollicitées, chaque fois par l'intermédiaire d'un interrupteur pilotable (par exemple de l'interrupteur à transistor $AL_N$), toujours par le même signal ($T_L$), et que chacun de ces interrupteurs (par exemple $A_{LN}$) est piloté chaque fois par une sortie du registre à décalage ($SR_{LR}$, $SR_{SR}$) d'une manière telle qu'à chaque impulsion de rythme du registre à décalage ($SR_{LR}$, $SR_{SR}$), ce signal (par exemple $T_L$) soit commuté sur l'entrée suivante du sommateur ($S_L$, $S_R$).

10. Appareil de réenclenchement suivant la revendication 7, caractérisé en ce que la première entrée de l'élément comparateur (V) est connectée à une entrée négative d'un premier sommateur ($S_P$) et à une entrée positive d'un second sommateur ($S_M$) et la deuxième entrée de l'élément comparateur (V) est connectée à une entrée positive du premier sommateur ($S_P$) et à une entrée négative du second sommateur ($S_M$) et la troisième entrée de l'élément comparateur (V) agit sur des entrées négatives de deux comparateurs ($K_P$ et $K_M$), pour lesquels l'entrée positive d'un premier comparateur ($K_P$) est connectée à la sortie du premier sommateur ($S_P$) et l'entrée positive du second comparateur ($K_M$) est connectée à la sortie du second sommateur ($S_M$) et pour lesquels la sortie du premier comparateur ($K_M$) agit sur une entrée du premier additionneur ($R_M$) et la sortie du second comparateur ($K_M$) agit sur une entrée du second additionneur ($R_S$) et les deux sorties sont en liaison active avec un élément à temps (intégrateur $I_A$, comparateur $K_A$) déterminant l'instant de réenclenchement ($t_E$) et un interrupteur ($A_S$) pilotant le calcul de l'instant de réenclenchement ($t_E$).

11. Appareil de réenclenchement suivant l'une quelconque des revendications 8 à 10, caractérisé en ce que la sortie du premier additionneur ($R_L$) est connectée à l'entrée d'un autre élément comparateur (comparateur $K_O$) qui fournit un signal bloquant le premier additionneur ($R_L$) dès qu'apparaît sur la sortie du premier additionneur ($R_L$), un signal ($nT_L$) qui est supérieur au signal $T_{mech} + T_S/4$, où $T_{mech}$ désigne le temps de manœuvre mécanique de l'interrupteur de puissance (A).

FIG.1

FIG.2

FIG.3

1

FIG.4

FIG.5

0 152 739

3